# EUROPÄISCHE PATENTANMELDUNG

(11) **EP 4 570 470 A1**
(43) Veröffentlichungstag der Anmeldung: **18.06.2025**
(21) Anmeldenummer: 24215780.8
(22) Anmeldetag: 27.11.2024
(51) Int. Cl.: B29C 48/40, B29C 48/92, B29C 48/68, B29B 7/74, B29B 7/20, B29B 7/48, B29B 7/72, B29B 7/18, B29K 7/00

(54) **DOPPELSCHNECKENEXTRUDER MIT SENSOREINHEIT UND VERFAHREN ZUR EXTRUSION EINER VULKANISIERBAREN KAUTSCHUKMISCHUNG**

(30) Priorität: 14.12.2023 DE 102023212679
(71) Anmelder: Continental Reifen Deutschland GmbH, 30175 Hannover (DE)
(72) Erfinder: Steiner, Frank Stefan, 30175 Hannover (DE); Kuck, Detlef, 30175 Hannover (DE); Raeggel, Kilian, 30175 Hannover (DE); Michel, Egor, 30175 Hannover (DE)
(74) Vertreter: Continental Corporation

(57) **Zusammenfassung**

Die Erfindung betrifft einen Doppelschneckenextruder (10) zur Verwendung bei der Extrusion von vulkanisierbaren Kautschukmischungen und deren Vorstufen, umfassend: i) einen Extruderkörper (12) mit einer im Inneren angeordneten Extruderkammer (14), wobei zwischen dem ersten Schneckenraum (20) und dem zweiten Schneckenraum (24) ein sich durch die Extruderkammer (14) erstreckender Gehäusesteg (28) angeordnet ist, ii) eine erste Schneckenwelle (22), iii) eine zweite Schneckenwelle (26), und iv) eine elektronische Sensoreinheit (30) zur Messung zumindest einer Sensorinformation,wobei die elektronische Sensoreinheit (30) in das Innere der Extruderkammer (14) ragt, und a) wobei der Gehäusesteg (28) eine sich entlang der Extrusionsrichtung erstreckende längliche Vertiefung (32) umfasst, wobei der Gehäusesteg im Vertiefungsbereich (34) weniger weit in das Innere der Extruderkammer (14) ragt als der Gehäusesteg (28) außerhalb des Vertiefungsbereichs (34), wobei die elektronische Sensoreinheit (30) so in der länglichen Vertiefung (32) angeordnet ist, dass die elektronische Sensoreinheit (30) in das Innere der Extruderkammer (14) ragt, oder b) wobei die elektronische Sensoreinheit (30) in der in Extrusionsrichtung weisenden Spitze der ersten Schneckenwelle (22) angeordnet ist.

## Beschreibung

Die Erfindung betrifft einen Doppelschneckenextruder zur Verwendung bei der Extrusion von vulkanisierbaren Kautschukmischungen und deren Vorstufen, ein Extrudersystem, welches einen entsprechenden Doppelschneckenextruder umfasst, sowie ein Verfahren zur Extrusion einer vulkanisierbaren Kautschukmischung oder deren Vorstufe mit einem entsprechenden Extrudersystem.

In der Kunststoffverarbeitenden Industrie im Allgemeinen und der Kautschuk verarbeitenden Industrie im Speziellen sind sogenannte Extruder, d. h. Vorrichtungen zum Extrudieren von Polymerzusammensetzungen, ein zentraler Bestandteil vieler Fertigungsverfahren. Die in den unterschiedlichen Bereichen eingesetzten Extruder werden dabei regelmäßig hinsichtlich ihrer konstruktiven Ausgestaltungen an die jeweiligen Anwendungszwecke angepasst, insbesondere hinsichtlich der Länge des Extruderkörpers sowie hinsichtlich der Zahl und Ausgestaltungen der im Extruder eingesetzten Schneckenwellen, welche für den Vortrieb des Extrudates in der Extruderkammer sowie dessen mechanische Belastung während des Extrusionsprozesses maßgeblich verantwortlich sind. Weitere Informationen zum technologischen Hintergrund sind beispielsweise in der EP 1710072 B1, der EP 3702125 A2, der EP 3623135 A1, der DE 102011009629 B4, der DE 3150719 C2, der JP 2009090544 A oder der EP 3915758 A1 offenbart.

In der Kautschuk verarbeitenden Industrie, insbesondere bei der Reifenherstellung, kommen Extrusionsprozesse insbesondere bei der Herstellung sogenannter "grüner" Bauteile zum Einsatz, d. h. solcher Bauteile, welche aus vulkanisierbaren Kautschukmischungen bestehen oder solche vulkanisierbaren Kautschukmischungen zumindest umfassen, jedoch noch nicht mittels Vulkanisation in die entsprechenden Gummiprodukte überführt wurden. Darüber hinaus werden jedoch auch Vorstufen solcher vulkanisierbaren Kautschukmischungen extrudiert, beispielsweise die sogenannten Vor- und Grundmischungen.

Hierbei kommen je nach Anwendungserfordernis verschiedene Extrusionsprozesse zum Einsatz, wobei insbesondere der Einsatz von Doppelschneckenextrudern von hoher industrieller Relevanz ist.

In der Vergangenheit war es häufig besonders wichtig, dass die im Extrusionsprozess eingesetzten Arbeitskräfte über ausreichend Erfahrung verfügen, um die eingesetzten Doppelschneckenextruder mit den richtigen Verfahrensparametern zu betreiben, insbesondere um die richtigen Temperaturen des Extrudates bzw. den gewünschten Massenfluss einzustellen. Die Prozesssteuerung erfordert es häufig, mit manuellen Kontrollmessungen die Temperatur des Extrudates zu bestimmen. Solche manuellen Kontrollmessungen sind jedoch sehr zeitaufwendig, erfordern großes Geschick und verringern die Zeit- und Kosteneffizienz des Extrusionsverfahrens spürbar. Zudem stellen entsprechende manuelle Kontrollmessungen an den heißen Extrudaten Sicherheitsrisiken für die eingesetzten Arbeitskräfte dar, sodass es wichtig ist, umfassende Arbeitssicherheitsvorkehrungen zu treffen.

Vor diesem Hintergrund besteht in der Branche ein fortgesetztes Interesse daran, wichtige Verfahrensparameter zuverlässig im Inneren des Extruders zu bestimmen, bevorzugt kontinuierlich, ohne dass dafür manuelle Kontrollmessungen durch die Arbeitskräfte notwendig sind.

Nach Einschätzung der Erfinder haben sich die aus dem Stand der Technik bekannten Ansätze insoweit jedoch nicht als vorteilhaft erwiesen. Insbesondere ist es für eine zuverlässige Bestimmung relevanter Verfahrensparameter, insbesondere der Temperatur des Extrudates und des Massenstroms, wichtig, dass die dafür verwendeten Sensoreinheiten hinreichend weit in das Extrudat im Inneren des Extruders hineinragen. Diese Anordnung birgt jedoch das Risiko, dass die zumeist fragile Sensoreinheit mit der im Inneren des Extruders rotierenden Extruderschnecke kollidiert und beschädigt wird. Eine solche mechanische Beschädigung kann dabei sogar dazu führen, dass Teile der Sensoreinheit abbrechen und weitere Anlagenteile beschädigen. Diese Problematik wird dadurch verstärkt, dass es prinzipiell wünschenswert ist, die entsprechenden Verfahrensparameter nahe der Extrusionsöffnung zu detektieren, wobei hier bei den aus dem Stand der Technik bekannten Extrudern regelmäßig besonders wenig Platz zur Verfügung steht, die Sensoreinheit in das Innere des Extruderraums ragen zu lassen. Zur Umgehung des Problems, dass die Sensoreinheiten durch die rotierende Schneckenwelle beschädigt werden können, wurde im Stand der Technik vorgeschlagen, entsprechende Sensoreinheiten bündig am Extrudergehäuse im Inneren der Extruderkammer zu platzieren. Eine entsprechende flache Anordnung an der Wandung der Extruderkammer erwies sich zwar hinsichtlich der mechanischen Beständigkeit der Sensoreinheit als zufriedenstellende Lösung, führte jedoch insbesondere bei Temperatursensoren dazu, dass die Messergebnisse nicht hinreichend präzise waren, da die Temperatur nur wandungsnah bestimmt werden konnte. Zudem wurde bei dem aus dem Stand der Technik bekannten Konzept beobachtet, dass durch die bündige Anordnung am Extrudergehäuse in vielen Fällen eine Verzerrung der Messung durch das Extrudergehäuse beobachtet wurde, was in einigen Fällen so weit ging, dass sich in Versuchen herausgestellt hat, dass im Wesentlichen die Temperatur des Gehäuses gemessen wurde.

Die primäre Aufgabe der vorliegenden Erfindung war es, die Nachteile des Standes der Technik auszuräumen oder zumindest abzuschwächen.

Insbesondere war es die Aufgabe der vorliegenden Erfindung, einen Doppelschneckenextruder anzugeben, in welchem für die Extrusion von vulkanisierbaren Kautschukmischungen und deren Vorstufen wichtige Sensorinformationen zuverlässig und automatisiert erfasst werden können, wobei es eine wünschenswerte Vorgabe war, dass die Erfassung der Sensorinformationen bei Bedarf auch kontinuierlich erfolgen kann.

Es war eine Aufgabe der vorliegenden Erfindung, die Notwendigkeit für manuelle Schritte bei der Messung der Sensorinformationen so weit wie möglich zu reduzieren und damit das Erfordernis an den Ausbildungsgrad der im Extrusionsprozess eingesetzten Arbeitskräfte zu minimieren. Insoweit war es auch wünschenswert, dass der anzugebende Doppelschneckenextruder die Arbeitssicherheit im Extrusionsprozess verbessern sollte.

Es war eine weitere Aufgabe der vorliegenden Erfindung, dass die Erfassung der Sensorinformationen mit einer hohen Präzision möglich sein sollte, wobei es insbesondere eine wünschenswerte Vorgabe war, dass die Sensorinformationen mit hinreichendem Abstand zur Wandung des Extruders bestimmt werden, sodass die Messergebnisse nicht von Effekten im Wandungsbereich verzerrt werden, wobei es insbesondere wünschenswert war, dass eine hinreichende Isolierung zwischen der Sensoreinheit und dem Extrudergehäuse möglich sein sollte.

Es war eine Aufgabe der vorliegenden Erfindung, dass der anzugebende Extruder besonders robust ausführbar sein sollte, wobei das Risiko einer mechanischen Beschädigung der elektronischen Sensoreinheit im Inneren des Extruders minimiert werden sollte.

Insoweit war es eine wünschenswerte Vorgabe, dass die anzugebenden Doppelschneckenextruder das Extrudieren von Kautschukmischungen und deren Vorstufen in exzellenter Qualität erlauben sollten, sodass die für die Durchführung der Erfassung der Sensorinformationen notwendigen Maßnahmen den Extrusionsvorgang möglichst wenig stören sollen.

Zudem war es eine Aufgabe der vorliegenden Erfindung, ein vorteilhaftes Verfahren zur Extrusion einer vulkanisierbaren Kautschukmischung bzw. deren Vorstufen bereitzustellen, welches die Vorteile des anzugebenden Doppelschneckenextruders ausnutzt und die Extrusion entsprechender vulkanisierbarer Kautschukmischungen bzw. deren Vorstufen in besonders zeit- und kosteneffizienter Art und Weise ermöglicht, wobei es eine wünschenswerte Maßgabe war, dass das bereitzustellende Verfahren möglichst leicht kontinuierlich betreibbar sein sollte und dabei eine verbesserte, insbesondere präzisere Prozessführung der Extrusion ermöglichen sollte, mit der es insbesondere möglich sein sollte, die im anzugebenden Doppelschneckenextruder erfassten Sensorinformationen in vorteilhafter Weise zur Steuerung des Extrusionsprozesses und/oder eines nachgelagerten Ausformprozesses zu nutzen, um entweder gezielt gewünschte Materialeigenschaften des Extrudates einzustellen oder die nachgelagerte Ausformung präzise an die erreichten Materialeigenschaften des Extrudates anzupassen.

Die Erfinder der vorliegenden Erfindung haben nunmehr gefunden, dass sich die vorstehend beschriebenen Aufgaben lösen lassen, wenn in einem Doppelschneckenextruder eine Sensoreinheit zur Messung zumindest einer Sensorinformation vorgesehen wird, welche in das Innere der Extruderkammer ragt, wenn diese in spezifischer Weise im Inneren des Doppelschneckenextruders angeordnet wird, wie es in den Ansprüchen definiert ist.

Die Erfinder haben erkannt, dass die elektronische Sensoreinheit entweder in einer länglichen Vertiefung angeordnet werden kann, welche in dem zwischen dem jeweiligen Schneckenräumen verlaufenden Gehäusesteg vorgesehen wird oder im Bereich der Spitze an der Schneckenwelle selbst befestigt wird.

Hierdurch ist es in vorteilhafter Weise möglich, die elektronische Sensoreinheit ohne Gefahr einer Beschädigung weit in das im Doppelschneckenextruder verarbeitete Extrudat hineinragen zu lassen, sodass die gewünschten Sensorinformationen mit hoher Präzision erfasst werden können, ohne dass die Haltbarkeit der Sensoreinheit nachteilig beeinflusst wird. Zudem erlauben sowohl die Versenkung in der länglichen Vertiefung als auch die Positionierung an der Spitze der Schneckenwelle es in vorteilhafter Weise, dass die eingesetzte elektronische Sensoreinheit nur einen sehr geringen Einfluss auf die Strömungsmechanik des im Inneren der Extruderkammer verarbeiteten Materials ausübt, sodass der Extrusionsprozess in vorteilhafter Weise nicht bzw. nicht im nennenswerten Umfang beeinflusst wird. Durch die entsprechende Anordnung ist es in vorteilhafter Weise möglich, kontinuierlich relevante Sensorinformationen, insbesondere die tatsächliche Prozesstemperatur des Mischgutes, zu messen, wodurch in vorteilhafter Weise eine präzise Prozessführung ermöglicht wird, insbesondere da die erfassten Sensorinformationen zur Steuerung des Doppelschneckenextruders bzw. der nachgelagerten Ausformprozesse verwendet werden können, um die Zeit- und Kosteneffizienz sowie die Qualität des erhaltenen Produktes zu optimieren.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Extrudersysteme und Verfahren ergeben sich aus den Merkmalen bevorzugter Doppelschneckenextruder.

Die Erfindung betrifft insbesondere einen Doppelschneckenextruder zur Verwendung bei der Extrusion von vulkanisierbaren Kautschukmischungen und deren Vorstufen, umfassend:
i) einen Extruderkörper mit einer im Inneren angeordneten Extruderkammer, wobei die Extruderkammer eine Eingabeöffnung und eine Extrusionsöffnung umfasst,
   wobei die Extruderkammer einen ersten Schneckenraum zur Aufnahme einer ersten Schneckenwelle und einen zweiten Schneckenraum zur Aufnahme einer zweiten Schneckenwelle umfasst,
   wobei zwischen dem ersten Schneckenraum und dem zweiten Schneckenraum ein sich durch die Extruderkammer erstreckender Gehäusesteg angeordnet ist,
ii) eine rotierbar im ersten Schneckenraum angeordnete erste Schneckenwelle,
iii) eine rotierbar im zweiten Schneckenraum angeordnete zweite Schneckenwelle, und
iv) eine elektronische Sensoreinheit zur Messung zumindest einer Sensorinformation,
wobei die elektronische Sensoreinheit in das Innere der Extruderkammer ragt, und
a) wobei der Gehäusesteg eine sich entlang der Extrusionsrichtung erstreckende längliche Vertiefung umfasst, wobei der Gehäusesteg im Vertiefungsbereich weniger weit in das Innere der Extruderkammer ragt als der Gehäusesteg außerhalb des Vertiefungsbereichs, wobei die elektronische Sensoreinheit so in der länglichen Vertiefung angeordnet ist, dass die elektronische Sensoreinheit in das Innere der Extruderkammer ragt, oder
b) wobei die elektronische Sensoreinheit in der in Extrusionsrichtung weisenden Spitze der ersten Schneckenwelle angeordnet ist.

Der erfindungsgemäße Doppelschneckenextruder ist für die Verwendung bei der Extrusion von vulkanisierbaren Kautschukmischungen besonders geeignet. Gleichzeitig eignet sich der Doppelschneckenextruder jedoch auch zur Verarbeitung von Vorstufen von vulkanisierbaren Kautschukmischungen, beispielsweise den sogenannten Vor- und Grundmischungen, welche im Bereich der kautschukverarbeitenden Industrie regelmäßig verarbeitet werden. Insoweit sind die Erfinder davon überzeugt, dass der erfindungsgemäße Doppelschneckenextruder prinzipiell auch für andere Technikbereiche vorteilhaft ist, in denen Doppelschneckenextruder zum Einsatz kommen, beispielsweise auch bei Lebensmittelherstellungsprozessen, welche auf den Einsatz von Doppelschneckenextrudern setzen. Hinsichtlich des grundsätzlichen Designs entspricht der erfindungsgemäße Doppelschneckenextruder einem herkömmlichen Doppelschneckenextruder. Solche Doppelschneckenextruder sind dem Fachmann im Bereich der Technik umfassend bekannt und von verschiedenen Anbietern kommerziell erhältlich. Es kann dabei als Vorteil des erfindungsgemäßen Verfahrens gesehen werden, dass bestehende kommerziell erhältliche Doppelschneckenextruder im Lichte der vorliegenden Offenbarung vergleichsweise einfach umgerüstet werden können, um daraus erfindungsgemäße Doppelschneckenextruder zu erzeugen.

Der Doppelschneckenextruder umfasst zunächst einen Extruderkörper, in dessen Inneren sich die Extruderkammer befindet, wobei die Extruderkammer eine Eingabeöffnung und eine Extrusionsöffnung umfasst. Die Eingabeöffnung dient dazu, das zu extrudierende Material in den Extruder einzufüttern, wohingegen das fertig extrudierte Material durch die Extrusionsöffnung aus der Extruderkammer austritt. Die Länge des Extruders wählt der Fachmann dabei insbesondere im Lichte des eingesetzten Materials und der gewünschten Extrusionswirkung. Beispielhaft ist ein erfindungsgemäßer Doppelschneckenextruder, wobei die Extruderkammer in Längsrichtung eine Länge L im Bereich von 30 bis 300 cm, bevorzugt im Bereich von 100 bis 200 cm, besonders bevorzugt im Bereich von 130 bis 180 cm, aufweist. Für die meisten Fälle relevant ist zusätzlich oder alternativ überdies ein erfindungsgemäßer Doppelschneckenextruder, wobei der Doppelschneckenextruder zusätzlich umfasst:
v) eine Antriebseinheit zur Rotation der Schneckenwellen, wobei die Antriebseinheit bevorzugt ein Elektromotor ist,
   und/oder
vi) eine Temperatursteuerungsvorrichtung zur Steuerung der Temperatur im Inneren der Extruderkammer.

Da es sich um einen Doppelschneckenextruder handelt, umfasst der Extruder zwei Schneckenwellen. In Übereinstimmung mit dem fachmännischen Verständnis sind diese Schneckenwellen im Inneren der Extruderkammer voneinander beabstandet. Zum Zwecke einer besseren Zuordnung werden dabei die Bereiche der Extruderkammer in denen die erste bzw. zweite Schneckenwelle angeordnet sind, als erster und zweiter Schneckenraum bezeichnet. Für die Schneckenwellen kann im Rahmen der vorliegenden Erfindung auf solche Schneckenwellen zurückgegriffen werden, welche typischerweise in Doppelschneckenextrudern zum Einsatz kommen. Bevorzugt ist ein erfindungsgemäßer Doppelschneckenextruder, wobei die erste Schneckenwelle und/oder die zweite Schneckenwelle, bevorzugt die erste Schneckenwelle und die zweite Schneckenwelle, sich über eine Länge von 0,8*L oder mehr, bevorzugt von 0,9*L oder mehr, besonders bevorzugt von 0,95*L oder mehr, in der Extruderkammer erstreckt, wobei L die Länge der Extruderkammer in Extrusionsrichtung ist. Bevorzugt ist zusätzlich oder alternativ ein erfindungsgemäßer Doppelschneckenextruder, wobei die erste Schneckenwelle und/oder die zweite Schneckenwelle, bevorzugt die erste Schneckenwelle und die zweite Schneckenwelle, über 80 % oder mehr, bevorzugt 90 % oder mehr, besonders bevorzugt 95 % oder mehr, eine eingängige Schnecke mit einem Schneckensteg ist.

Um eine gute Förderwirkung zu erzielen, ist es dabei zweckmäßig, dass die Schneckenwellen mit ihren Schneckenstegen relativ nah an der Wandung der Extruderkammer im jeweiligen Schneckenraum verlaufen. Bevorzugt ist ein erfindungsgemäßer Doppelschneckenextruder, wobei die erste Schneckenwelle in der Projektion auf die Ebene einen Radius aufweist, der 0,9*r₁ oder mehr, bevorzugt 0,95*r₁ oder mehr, besonders bevorzugt 0,98*r₁ oder mehr, beträgt, wobei r₁ der Radius des Kreissegments des ersten Schneckenraums ist. Bevorzugt ist zusätzlich oder alternativ ein erfindungsgemäßer Doppelschneckenextruder, wobei die zweite Schneckenwelle in der Projektion auf die Ebene einen Radius aufweist, der 0,9*r₂ oder mehr, bevorzugt 0,95*r₂ oder mehr, besonders bevorzugt 0,98*r₂ oder mehr, beträgt, wobei r₂ der Radius des Kreissegments des zweiten Schneckenraums ist.

Doppelschneckenextruder werden regelmäßig dafür eingesetzt, um das im Extruder verarbeitete Material mechanisch zu belasten und/oder zwei oder mehrere Komponenten einer Mischung innig miteinander zu vermengen. Hierfür ist es in Übereinstimmung mit dem fachmännischen Verständnis bevorzugt, wenn die Schneckenstege der Schneckenwellen im Grenzbereich der Schneckenräume ineinandergreifen, sodass die Schneckenstege der Schneckenwellen jeweils teilweise in den Schneckenraum der anderen Schneckenwelle hineinreichen. Aus dieser Anordnung folgt, dass die Extruderkammer im Querschnitt bevorzugt die Form von zwei sich kontaktierenden Kreissegmenten aufweist. Bevorzugt ist ein erfindungsgemäßer Doppelschneckenextruder, wobei der erste Schneckenraum und/oder der zweite Schneckenraum, bevorzugt der erste Schneckenraum und der zweite Schneckenraum, einen Querschnitt in der Form eines Kreissegments aufweisen, wobei sich der erste Schneckenraum und der zweite Schneckenraum besonders bevorzugt an den Kreissehnen der Kreissegmente berühren. Bevorzugt ist zusätzlich oder alternativ ein erfindungsgemäßer Doppelschneckenextruder, wobei der Kreisbogen des Kreissegments des ersten Schneckenraums und/oder der Kreisbogen des Kreissegments des zweiten Schneckenraums, einen Radius r₁ bzw. r₂ im Bereich von 100 bis 900 mm, bevorzugt im Bereich von 200 bis 700 mm, besonders bevorzugt im Bereich von 350 bis 550 mm, aufweist, wobei sich r₁ und r₂ bevorzugt um weniger als 10 %, besonders bevorzugt um weniger als 5 %, ganz besonders bevorzugt um weniger als 1 %, unterscheiden. Bevorzugt ist zusätzlich oder alternativ ein erfindungsgemäßer Doppelschneckenextruder, wobei der Mittelpunkt des Kreisbogens des ersten Schneckenraums und der Mittelpunkt des Kreisbogens des zweiten Schneckenraums voneinander einen Abstand im Bereich von 0,75*(r₁+r₂) bis 1,0*(r₁+r₂), bevorzugt im Bereich von 0,8*(r₁+r₂) bis 0,95*(r₁+r₂), besonders bevorzugt im Bereich von 0,85*(r₁+r₂) bis 0,9*(r₁+r₂). Hierbei ist es insbesondere auch möglich und für zahlreiche Anwendungen bevorzugt, dass die Extruderkammern eine konische Geometrie aufweisen, sodass sich die Schneckenwellen und die zugehörigen Schneckenräume entlang der Extrusionsrichtung verjüngen. In diesem Fall variiert der sich r₁ und r₂ bevorzugt in den vorstehend angegeben Bereichen. In besonders bevorzugten Ausführungsformen ist die Form der Schneckenwellen an die konische Form der Extruderkammer angepasst, so dass sich auch die Schneckenwellen entlang der Extrusionsrichtung verjüngen.

Um zu verhindern, dass die ineinandergreifenden Schneckenstege der Schneckenwellen sich berühren, ist es zweckmäßig, zwischen diesen einen Gangunterschied vorzusehen, sodass diese versetzt verlaufen. Bevorzugt ist ein erfindungsgemäßer Doppelschneckenextruder, wobei die Schneckenstege der erste Schneckenwelle und der zweiten Schneckenwelle einen Gangunterschied im Bereich von 160° bis 200°, bevorzugt im Bereich von 170° bis 190°, besonders bevorzugt von im Wesentlichen 180°, aufweisen.

Erfindungsgemäß ist zwischen der ersten Extruderkammer und der zweiten Extruderkammer ein Abschnitt des Gehäuses angeordnet, welcher im Rahmen der vorliegenden Erfindung als Gehäusesteg bezeichnet wird und welcher auch bei denen aus dem Stand der Technik bekannten Doppelschneckenextrudern bekannt ist. Bei diesem Gehäusesteg handelt es sich um ein Strukturelement, bei dem die Wandung der Extruderkammer quasi in das Innere der Extruderkammer hineinragt, um den ersten und zweiten Schneckenraum teilweise voneinander abzugrenzen. Auch wenn es prinzipiell denkbar wäre, ein entsprechendes Strukturelement auch bei anderen Querschnittsgeometrien der Schneckenräume zu realisieren, ergibt sich der entsprechende Gehäusesteg besonders einfach dann, wenn die Schneckenräume, wie im Stand der Technik verbreitet, als Kreissegmente ausgeführt werden, wobei der Schneckensteg in Übereinstimmung mit dem fachmännischen Verständnis im Kontaktbereich der Kreissegmente ausgebildet wird. Der entsprechende Gehäusesteg erstreckt sich dabei zumeist über einen Großteil der Länge der Extruderkammer, zumeist bis kurz vor die Extrusionsöffnung und ist an seinem Kamm zumeist abgeflacht, um zu vermeiden, dass ein zu spitz zulaufender Gehäusesteg infolge der auftretenden mechanischen Belastungen beim Extrudieren zu leicht deformiert wird. Aus der zumeist überwiegend symmetrischen Auslegung entsprechender Doppelschneckenextruder folgt, dass regelmäßig zwei Gehäusestege vorliegen, welche zumeist spiegelsymmetrisch, beispielsweise oben und unten in der Extruderkammer verlaufen. Bevorzugt ist ein erfindungsgemäßer Doppelschneckenextruder, wobei der Gehäusesteg eine kammförmige Erhebung zwischen dem erste Schneckenraum und dem zweite Schneckenraum ist, wobei der Gehäusesteg bevorzugt gekrümmte Stegflanken aufweist. Bevorzugt ist zusätzlich oder alternativ ein erfindungsgemäßer Doppelschneckenextruder, wobei sich der Gehäusesteg über eine Länge von 0,8*L oder mehr, bevorzugt von 0,9*L oder mehr, besonders bevorzugt von 0,95*L oder mehr, in der Extruderkammer erstreckt, wobei L die Länge der Extruderkammer in Extrusionsrichtung ist. Bevorzugt ist zusätzlich oder alternativ ein erfindungsgemäßer Doppelschneckenextruder, wobei der Gehäusesteg eine Plateaufläche aufweist, wobei die Plateaufäche eine mittlere Breite im Bereich von 3 bis 30 mm, bevorzugt 4 bis 20 mm, besonders bevorzugt 5 bis 15 mm, aufweist.

Im erfindungsgemäßen Doppelschneckenextruder wird zumindest eine elektronische Sensoreinheit vorgesehen, welche der Messung zumindest einer Sensorinformation dient. Prinzipiell ist es sowohl möglich, dass zwei oder mehr elektronische Sensoreinheiten eingesetzt werden, wobei diese bevorzugt sämtlich wie vorstehend definiert angeordnet werden. Darüber hinaus ist es auch möglich, durch den Einsatz moderner elektronischer Sensoreinheiten zwei oder mehr Sensorinformationen mit der gleichen elektronischen Sensoreinheit zu bestimmen. Nach Einschätzung der Erfinder sind die für das erfindungsgemäße Verfahren, d. h. insbesondere die sensorgestützte Steuerung des Extrusionsprozesses bzw. der nachgelagerten Verarbeitungsschritte, besonders interessanten Sensorinformationen, insbesondere der Massenstrom und die Temperatur, wobei vor allem der Temperaturmessung eine besonders große Bedeutung zukommt. Bevorzugt ist ein erfindungsgemäßer Doppelschneckenextruder, wobei die elektronische Sensoreinheit ein Temperatursensor und/oder ein Strömungsdrucksensor und/oder ein Massenstromsensor, bevorzugt ein Temperatursensor und/oder Massenstromsensor, besonders bevorzugt ein Temperatursensor, ist. Bevorzugt ist zusätzlich oder alternativ ein erfindungsgemäßer Doppelschneckenextruder, wobei die elektronische Sensoreinheit ein Thermoelement, bevorzugt ein Fe-CuNi oder NiCr-Ni-Thermoelement, oder ein Widerstandsmesselement, bevorzugt ein Pt100-Widerstandsmesselement, umfasst, bevorzugt ein Pt100-Widerstandsmesselement.

Wie nachfolgend weiter erläutert, ist es erfindungsgemäß vorgesehen, dass die elektronische Sensoreinheit in das Innere der Extruderkammer ragt, sodass sie die relevanten Sensorinformationen im Inneren der im Extruder verarbeiteten Mischung und insbesondere mit einem gewissen Abstand zur Wandung der Extruderkammer bestimmen kann. Um dies zu realisieren, eignen sich dabei insbesondere stabförmig ausgebildete Sensoreinheiten, insbesondere auch weil solche stabförmigen Sensoreinheiten besonders effizient in Bohrungen angeordnet werden können, welche im Extruderkörper bzw. der Schneckenwelle an den vorbestimmten Stellen erzeugt werden können. Bevorzugt ist ein erfindungsgemäßer Doppelschneckenextruder, wobei die elektronische Sensoreinheit eine stabförmige Sensoreinheit ist. Bevorzugt ist zusätzlich oder alternativ ein erfindungsgemäßer Doppelschneckenextruder, wobei die elektronische Sensoreinheit 5 bis 30 mm, bevorzugt 7,5 bis 25 mm, besonders bevorzugt 10 bis 20 mm, in das Innere der Extruderkammer ragt, bezogen auf die die elektronische Sensoreinheit umgebende Wandung der Extruderkammer oder die erste Schneckenwelle.

Die Erfinder haben erkannt, dass es insbesondere für die sensorbasierte Steuerung im erfindungsgemäßen Verfahren besonders wünschenswert ist, die entsprechenden Sensorinformationen möglichst nah an der Extrusionsöffnung zu bestimmen, auch wenn dies konstruktiv besonders herausfordernd ist. Insbesondere die Position im Bereich der Schneckenspitze, d. h. unmittelbar an der Schneckenspitze oder im Gehäusesteg auf Höhe der Schneckenspitze, kurz vor Eintritt der verarbeiteten Mischung in die nachgelagerten Verarbeitungsvorrichtungen, insbesondere Kalander, hat sich dabei als besonders geeignete Positionierung für die elektronische Sensoreinheit erwiesen. Bevorzugt ist nämlich ein erfindungsgemäßer Doppelschneckenextruder, wobei die elektronische Sensoreinheit zur Extrusionsöffnung einen Abstand von 0,15*L oder weniger, bevorzugt von 0,1*L oder weniger, besonders bevorzugt von 0,05*L oder weniger, aufweist, wobei L die Länge der Extruderkammer in Extrusionsrichtung ist, und/oder wobei die elektronische Sensoreinheit bezogen auf die Extrusionsrichtung weniger als eine volle Windung des Schneckenstegs der ersten Schneckenwelle und/oder der zweiten Schneckenwelle vor dem Ende der ersten Schneckenwelle und/oder der zweiten Schneckenwelle angeordnet ist, wobei die elektronische Sensoreinheit bezogen auf die Extrusionsrichtung bevorzugt hinter der letzten vollen Windung des Schneckenstegs der ersten Schneckenwelle und/oder der zweiten Schneckenwelle angeordnet ist.

In einer ersten vorteilhaften Ausgestaltung für die Positionierung der elektronischen Sensoreinheit wird eine längliche Vertiefung im Gehäusesteg vorgesehen, an deren Boden die elektronische Sensoreinheit so befestigt werden kann, dass diese in den von der länglichen Vertiefung geschaffenen Freiraum oder sogar darüber hinaus noch weiter in das Innere des Extruderkammer ragen kann. Aus der bevorzugten Positionierung der elektronischen Sensoreinheit nah an der Extrusionsöffnung folgt, dass auch die längliche Ausnehmung bevorzugt in der Nähe der Extrusionsöffnung platziert werden sollte. Bevorzugt ist demgemäß ein erfindungsgemäßer Doppelschneckenextruder, wobei die längliche Vertiefung zur Extrusionsöffnung einen Abstand von 0,15*L oder weniger, bevorzugt von 0,1*L oder weniger, besonders bevorzugt von 0,05*L oder weniger, aufweist, wobei L die Länge der Extruderkammer in Extrusionsrichtung ist.

Für den Fachmann ist eine längliche Vertiefung klar von einer im Wesentlichen kreisförmigen Bohrung zu unterscheiden. Der Ausdruck länglich bedeutet, dass die Vertiefung in Extrusionsrichtung eine größere Ausdehnung aufweist als in der orthogonal auf der in der Extrusionsrichtung und der Tiefenrichtung stehenden Breitenrichtung. Durch die Anordnung in der entsprechenden länglichen Vertiefung liegt die elektronische Sensoreinheit außerhalb des Rotationsbereiches der Schneckenwellen und vorteilhafterweise im Strömungsschatten des angrenzenden Gehäusesteges, sodass die elektronische Sensoreinheit in vorteilhafter Weise vor einer zu starken mechanischen Belastung während des Extrusionsvorgangs geschützt wird. Bevorzugt ist entsprechend ein erfindungsgemäßer Doppelschneckenextruder, wobei die längliche Vertiefung entlang der Längsrichtung der Extruderkammer eine mittlere Länge im Bereich von 50 bis 300 mm, bevorzugt 60 bis 200 mm, besonders bevorzugt 80 bis 150 mm, aufweist. Bevorzugt ist alternativ oder zusätzlich ein erfindungsgemäßer Doppelschneckenextruder, wobei die mittlere Tiefe der länglichen Vertiefung relativ zum angrenzenden Gehäusesteg im Bereich von 5 bis 30 mm, bevorzugt 6 bis 20 mm, besonders bevorzugt 8 bis 12 mm, liegt, und/oder wobei die maximale Tiefe der länglichen Vertiefung relativ zum angrenzenden Gehäusesteg im Bereich von 5 bis 30 mm, bevorzugt 6 bis 20 mm, besonders bevorzugt 8 bis 12 mm, liegt.

In eigenen Versuchen haben die Erfinder erkannt, dass es vorteilhaft ist, die längliche Vertiefung nicht mit scharfen Kanten auszuführen, sondern diese idealerweise an beiden Seiten in Extrusionsrichtung sanft auslaufen zu lassen, da dies dazu führt, dass die entsprechende längliche Vertiefung die Strömungsdynamik im Inneren der Extruderkammer möglichst wenig beeinflusst und sich so vermeiden lässt, dass sich in der länglichen Vertiefung längerfristige Ablagerungen festsetzen, welche den Extrusionsprozess stören können. Bevorzugt ist folglich ein erfindungsgemäßer Doppelschneckenextruder, wobei die längliche Vertiefung entlang der Extrusionsrichtung abgeflacht ist, und/oder wobei die Tiefe der länglichen Vertiefung ausgehend von dem Bereich der maximalen Tiefe in Extrusionsrichtung abnimmt, bevorzugt im Wesentlichen kontinuierlich. Bevorzugt ist zusätzlich oder alternativ ein erfindungsgemäßer Doppelschneckenextruder, wobei die längliche Vertiefung entgegen der Extrusionsrichtung abgeflacht ist, und/oder wobei die Tiefe der länglichen Vertiefung ausgehend von dem Bereich der maximalen Tiefe entgegen der Extrusionsrichtung abnimmt, bevorzugt im Wesentlichen kontinuierlich. Bevorzugt ist zusätzlich oder alternativ ein erfindungsgemäßer Doppelschneckenextruder, wobei die längliche Vertiefung im zentralen Anschnitt parallel zur Extrusionsrichtung einen dreieckigen Querschnitt aufweist, und/oder wobei die längliche Vertiefung im zentralen Anschnitt parallel zur Extrusionsrichtung einen Querschnitt aufweist, der sich in zumindest eine Richtung, bevorzugt beide Richtungen, verjüngt.

Besonders bevorzugt ist es nach Einschätzung der Erfinder, die längliche Vertiefung als eine Kerbe im Gehäusesteg auszuführen, sodass diese an den in Richtung der Schneckenräume weisenden Seiten nicht von seitlichen Wandungen begrenzt wird. Auch dies verringert in vorteilhafter Weise den Einfluss der länglichen Vertiefung auf die bei der Extrusion auftretenden Materialströme und erlaubt es, die ungewollte Festsetzung von Verunreinigungen zu vermeiden. Bevorzugt ist somit ein erfindungsgemäßer Doppelschneckenextruder, wobei die längliche Vertiefung keine seitlichen Wandungen umfasst, die die längliche Vertiefung parallel zur Extrusionsrichtung begrenzen, und/oder wobei die längliche Vertiefung eine Kerbe im Gehäusesteg ist.

Um die Vorteile der Anordnung der elektronischen Sensoreinheit in der länglichen Vertiefung zu maximieren, schlagen die Erfinder vor, dass die elektronische Sensoreinheit an einem Punkt platziert werden sollte, in dem die längliche Vertiefung hinreichend tief ist. Bevorzugt ist vor diesem Hintergrund ein erfindungsgemäßer Doppelschneckenextruder, wobei die elektronische Sensoreinheit in einem Bereich der länglichen Vertiefung angeordnet ist, in dem die Tiefe der länglichen Vertiefung 50 % oder mehr, bevorzugt 70 % oder mehr, besonders bevorzugt 90 % oder mehr, der maximalen Tiefe beträgt.

Beim Einsatz von sehr tiefen länglichen Vertiefung ist eine Ausgestaltung denkbar, in denen die elektronische Sensoreinheit durch die längliche Vertiefung besonders gut vor mechanischen Belastungen durch die Schneckenwellen und/oder das extrudierte Material geschützt ist, kann die elektronische Sensoreinheit potentiell derart tief in der länglichen Vertiefung angeordnet wird, dass sie nicht über die in Extrusionsrichtung vor- und nachgelagerten Teile des Gehäusestegs hinausragt. Bevorzugt ist es jedoch für eine gute Temperaturmessung im vorbeigeführten Material, die Sensoreinheit etwas über die gedachte Verlängerung des Gehäusestegs hinaus ragen zu lassen, wobei es mit Blick auf die angestrebte Wirkung der Erfindung zielführend ist, die Sensoreinheit nicht zu weit in die Extruderkammer ragen zu lassen. Bevorzugt ist entsprechend ein erfindungsgemäßer Doppelschneckenextruder, wobei die elektronische Sensoreinheit so in der länglichen Vertiefung angeordnet ist, dass die elektronische Sensoreinheit weiter in das Innere der Extruderkammer ragt als der Gehäusesteg außerhalb des Vertiefungsbereichs, bevorzugt um 10 mm oder weniger, besonders bevorzugt um 7 mm oder weniger, ganz besonders bevorzugt um 5 mm oder weniger.

In der länglichen Vertiefung selbst kann die elektronische Sensoreinheit insbesondere formschlüssig fixiert werden, beispielsweise indem eine stabförmige Sensoreinheit in eine am Boden der länglichen Vertiefung vorgesehenen Bohrung positioniert wird. Bevorzugt ist ein erfindungsgemäßer Doppelschneckenextruder, wobei die elektronische Sensoreinheit formschlüssig und/oder stoffschlüssig, bevorzugt formschlüssig, in der länglichen Vertiefung fixiert ist, und/oder wobei die längliche Vertiefung eine Aufnahmeausnehmung umfasst, bevorzugt eine Bohrung, wobei die elektronische Sensoreinheit in dem nicht in das Innere der Extruderkammer ragenden Teil in der Aufnahmeausnehmung angeordnet ist.

In einer alternativen Ausgestaltung zu der Positionierung in der länglichen Vertiefung des Gehäusesteges schlagen die Erfinder vor, dass sich besonders vorteilhafte Doppelschneckenextruder auch dann erhalten lassen, wenn die elektronische Sensoreinheit in der Spitze einer der Schneckenwellen angeordnet ist, wobei im Rahmen der vorliegenden Erfindung zum Zwecke einer klareren Benennung definiert wird, dass die die elektronische Sensoreinheit in der Spitze aufweisende Schneckenwelle die erste Schneckenwelle ist. Bevorzugt ist ein erfindungsgemäßer Doppelschneckenextruder, wobei die in Extrusionsrichtung weisende Spitze der ersten Schneckenwelle sich über 0,05*S oder weniger, bevorzugt 0,02*S oder weniger, besonders bevorzugt 0,01*S oder weniger, von der Spitze der ersten Schneckenwelle entlang der ersten Schneckenwelle erstreckt, wobei S die Gesamtlänge der ersten Schneckenwelle ist.

Nach Einschätzung der Erfinder ergibt sich eine besonders vorteilhafte Ausgestaltung dieser Ausführungsform dann, wenn die elektronische Sensoreinheit so in das Innere der Extruderkammer ragt, dass die Längsachse der Sensoreinheit im Wesentlichen parallel zu der Längsachse der ersten Schneckenwelle verläuft. Grundsätzlich ist es jedoch auch möglich, die elektronische Sensoreinheit im seitlichen Bereich der Spitze anzuordnen. Infolge der von der Sensoreinheit dabei erfahrenen Rotation bedingt eine größere Auslenkung hierbei jedoch, dass die in das Innere der Extruderkammer ragende elektronische Sensoreinheit merklich durch die im Extruder verarbeitete Mischung geführt wird und infolgedessen eine gesteigerte mechanische Belastung erfährt. Gleichzeitig ist es hierbei jedoch in vorteilhafter Weise möglich, an unterschiedlichen Stellen im Inneren der Extruderkammer die Temperatur zu bestimmen. Bevorzugt ist somit ein erfindungsgemäßer Doppelschneckenextruder, wobei die elektronische Sensoreinheit so an der in Extrusionsrichtung weisenden Spitze der ersten Schneckenwelle angeordnet ist, dass die elektronische Sensoreinheit zumindest teilweise, bevorzugt vollständig, in Extrusionsrichtung in das Innere der Extruderkammer ragt. Bevorzugt ist zusätzlich oder alternativ ein erfindungsgemäßer Doppelschneckenextruder, wobei die elektronische Sensoreinheit so an der in Extrusionsrichtung weisenden Spitze der ersten Schneckenwelle angeordnet ist, dass die elektronische Sensoreinheit entlang einer Richtung in das Innere der Extruderkammer ragt, welche mit der Extrusionsrichtung einen Winkel von 30° oder weniger, bevorzugt 15° oder weniger, besonders bevorzugt 5° oder weniger, ganz besonders bevorzugt von im Wesentlichen 0°, einschließt.

Insbesondere wenn die elektronische Sensoreinheit im seitlichen Bereich der Spitze der Schneckenwelle angeordnet werden soll, ist es in vorteilhafter Weise möglich, das vorstehend beschriebenen Konzept einer länglichen Ausnehmung zur Aufnahme der elektronischen Sensoreinheit auf die Positionierung an der Schneckenspitze zu adaptieren, wobei die mechanische Belastung durch den erzeugten Strömungsschatten reduziert werden kann. Bevorzugt ist entsprechend ein erfindungsgemäßer Doppelschneckenextruder, wobei die erste Schneckenwelle an der in Extrusionsrichtung weisenden Spitze eine sich entlang der Längsrichtung des Gehäusesteges erstreckende längliche Ausnehmung umfasst, wobei die Spitze im Ausnehmungsbereich weniger weit in das Innere der Extruderkammer ragt als die Spitze außerhalb des Ausnehmungsbereichs, wobei die elektronische Sensoreinheit so in der länglichen Ausnehmung angeordnet ist, dass die elektronische Sensoreinheit weniger weit in das Innere der Extruderkammer ragt als die Spitze außerhalb des Ausnehmungsbereichs.

Es kann als großer Vorteil der erfindungsgemäßen Doppelschneckenextruder gesehen werden, dass mit diesen sogar eine kontinuierliche Erfassung von maßgeblichen Sensorinformationen, beispielsweise der Temperatur und des Massenstromes möglich ist. Die Erfinder erachten es als besonders vorteilhaft, die Steuerung des Doppelschneckenextruders und/oder der nachgelagerten Verarbeitungsanlagen in Abhängigkeit der gemessenen Sensorinformationen zu steuern bzw. zu regeln. Hierdurch können in vorteilhafter Weise die Betriebsparameter des Doppelschneckenextruders angepasst werden, wenn die detektierten Sensorinformationen zu stark von den Soll-Werten abweichen. Zusätzlich oder alternativ ist es jedoch auch möglich, die nachgelagerten Verarbeitungsschritte beispielsweise die Betriebsparameter eines zur Ausformung verwendeten Kalanders, in Abhängigkeit der detektierten Materialinformationen des Extrudates zu steuern, beispielsweise hinsichtlich der Kühlung des Extrudates. Um diese vorteilhafte Verfahrensführung zu realisieren, schlagen die Erfinder vor, dass der erfindungsgemäße Doppelschneckenextruder in einem vorteilhaften Extrudersystem zumindest mit einer elektronischen Steuerungseinheit kombiniert werden sollte, die dazu eingerichtet ist, die sensorinformationsbasierte Steuerung zu realisieren. Die entsprechende Einrichtung der elektronischen Steuerungseinheit kann dabei durch eine geeignete Software realisiert werden.

Die Erfindung betrifft daher auch ein Extrudersystem zur Verwendung bei der Extrusion von vulkanisierbaren Kautschukmischungen und deren Vorstufen, umfassend:
I) einen erfindungsgemäßen Doppelschneckenextruder, und
II) eine elektronische Steuerungseinheit zur Steuerung des Extrudersystems, wobei die elektronische Steuerungseinheit dazu eingerichtet ist, den Doppelschneckenextruder in Abhängigkeit einer von der elektronischen Sensoreinheit gemessenen Sensorinformation zu steuern.

Bevorzugt ist ein erfindungsgemäßes Extrudersystem, wobei das Extrudersystem zusätzlich umfasst:
III) eine im Bereich der Extrusionsöffnung des Doppelschneckenextruders angeordnete Verarbeitungsvorrichtung, zum Ausformen einer extrudierten vulkanisierbaren Kautschukmischung bzw. Vorstufe eine solchen vulkanisierbaren Kautschukmischung, bevorzugt ein Walzwerk.

Die Erfindung betrifft zudem ein Verfahren zur Extrusion einer vulkanisierbaren Kautschukmischung oder deren Vorstufe mit einem erfindungsgemäßen Extrudersystem, umfassend die Verfahrensschritte:
v1) Herstellen oder Bereitstellen einer vulkanisierbaren Kautschukmischung oder deren Vorstufe,
v2) Extrudieren der vulkanisierbaren Kautschukmischung oder deren Vorstufe mit dem Doppelschneckenextruder, und
v3) Messen einer Sensorinformation mit der elektronischen Sensoreinheit,
wobei das Extrudieren von der elektronischen Steuerungseinheit zumindest teilweise in Abhängigkeit von der gemessenen Sensorinformation gesteuert wird.

Bevorzugt ist ein erfindungsgemäßes Verfahren, wobei das Messen der Sensorinformation mit einer Messfrequenz von 10 Hz oder mehr oder kontinuierlich, bevorzugt mit einer Messfrequenz von 20 Hz oder mehr oder kontinuierlich, besonders bevorzugt kontinuierlich, erfolgt.

Bevorzugt ist ein erfindungsgemäßes Verfahren, wobei das Extrudieren so erfolgt, dass die extrudierte vulkanisierbare Kautschukmischung eine mittlere Temperatur im Bereich von 80 bis 145 °C, bevorzugt im Bereich von 100 bis 135 °C, aufweist.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines erfindungsgemäßen Extrudersystems mit einem erfindungsgemäßen Doppelschneckenextruder in einer bevorzugten Ausführungsform;
- Fig. 2: eine schematische Ansicht eines ersten Extruderkörpers eines Doppelschneckenextruders,
- Fig. 3: eine schematische Ansicht eines zweiten Extruderkörpers eines Doppelschneckenextruders,
- Fig. 4: eine schematische Frontalansicht eines erfindungsgemäßen Doppelschneckenextruders in einer bevorzugten Ausführungsform.

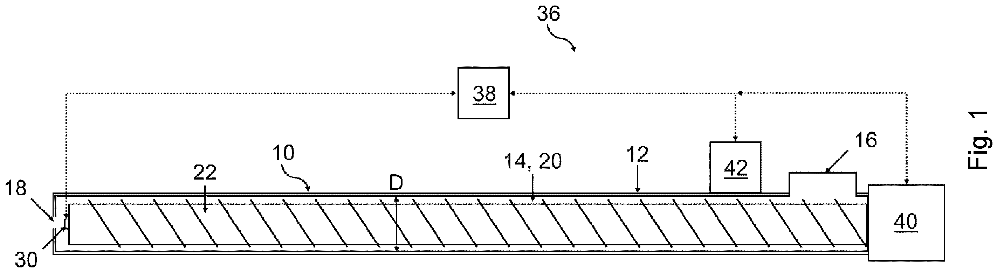

Fig. 1 zeigt eine schematische Querschnittsdarstellung eines erfindungsgemäßen Extrudersystems 36 mit einem erfindungsgemäßen Doppelschneckenextruder 10 in der Seitenansicht einer bevorzugten Ausführungsform. Der Doppelschneckenextruder 10 umfasst einen Extruderkörper 12, in dessen Extruderkammer 14 jeweils in einem Schneckenraum eine Schneckenwelle angeordnet ist. In der gezeigten Seitenansicht ist dabei der erste Schneckenraum 20 zu erkennen, in dem die erste Schneckenwelle 22 angeordnet ist, welche im gezeigten Beispiel als eingängige Schnecke ausgeführt ist, deren Schneckenstege sich in der frontalen Projektion nahezu über den gesamten Durchmesser D des ersten Schneckenraums 20 erstrecken und deren Länge nahezu der Länge der Extruderkammer 14 entspricht, sodass sich die erste Schneckenwelle 22 im Wesentlichen von der Eingabeöffnung 16 bis zur Extrusionsöffnung 18 erstreckt. Die erste Schneckenwelle 22 ist rotierbar im Inneren der Extruderkammer 14 befestigt und wird von einer Antriebseinheit 40 angetrieben, bei der es sich beispielsweise um einen Elektromotor handeln kann.

In dem gezeigten Beispiel der Fig. 1 ist die elektronische Sensoreinheit 30 an der in Extrusionsrichtung weisenden Spitze der ersten Schneckenwelle 22 angeordnet, wobei sich die elektronische Sensoreinheit 30 im Wesentlichen parallel zur Längsachse der ersten Schneckenwelle 22 erstreckt. Das erfindungsgemäße Extrudersystem 36 umfasst zusätzlich eine Temperatursteuerungsvorrichtung 42 und ist dazu eingerichtet, dass die von der elektronischen Sensoreinheit 30 erfassten Sensorinformationen an die elektronische Steuerungseinheit 38 übermittelt werden können, wobei die elektronische Steuerungseinheit 38 dazu eingerichtet ist, die Antriebseinheit 40 und die Temperatursteuerungsvorrichtung 42 sowie eine in Fig. 1 nicht gezeigte nachgelagerte Verarbeitungsvorrichtung, insbesondere einen Kalander, in Abhängigkeit der erfassten Sensorinformationen zu steuern.

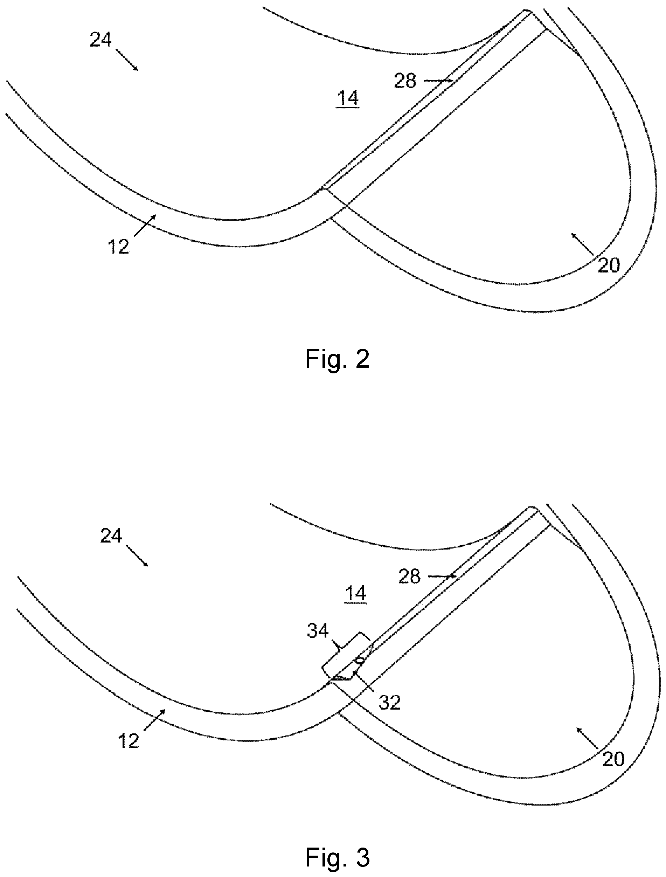

Fig. 2 zeigt den Extruderkörper 12 eines herkömmlichen Doppelschneckenextruders 10, wie er beispielsweise für solche erfindungsgemäßen Doppelschneckenextruder 10 verwendet werden könnte, bei denen die elektronische Sensoreinheit 30 in der Spitze der ersten Schneckenwelle 22 angeordnet ist. Klar zu erkennen sind der erste Schneckenraum 20 und der zweite Schneckenraum 24, welche gemeinsam die Extruderkammer 14 bilden, welche im Querschnitt die Form von zwei sich kontaktierenden Kreissegmenten aufweist. Der erste Schneckenraum 20 und der zweite Schneckenraum 24 werden durch den dazwischen gebildeten Gehäusesteg 28 begrenzt, welcher an seiner Oberseite eine abgeflachte Plateaufläche aufweist.

In Fig. 3 ist beispielhaft visualisiert, wie eine längliche Vertiefung 32 mit dem resultierenden Vertiefungsbereich 34 in dem Gehäusesteg 28 angeordnet werden kann, um eine effiziente gehäuseseitige Positionierung der elektronischen Sensoreinheit 30 zu realisieren. Die längliche Vertiefung 32 ist zur Optimierung der Strömungseigenschaften entlang der Extrusionsrichtung in beide Richtungen abgeflacht und derart als Kerbe ausgeführt, dass der Vertiefungsbereich 34 seitlich nicht von Seitenwänden begrenzt wird. Zu erkennen ist in Fig. 3 eine Bohrung, in die eine beispielsweise stiftartige elektronische Sensoreinheit 30 eingesetzt werden kann, um diese zumindest teilweise in der längliche Vertiefung 32 zu versenken.

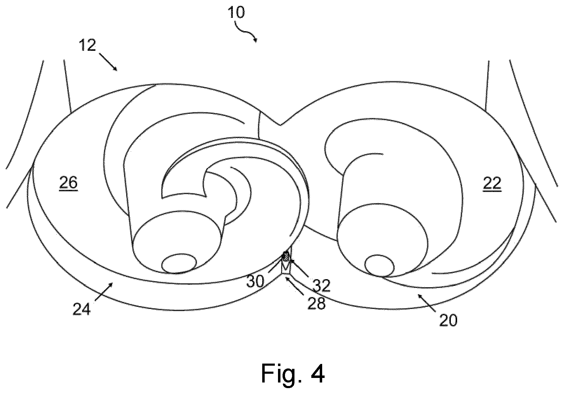

Fig. 4 zeigt abschließend eine vereinfachte Frontalansicht eines erfindungsgemäßen Doppelschneckenextruders 10 in einer bevorzugten Ausführungsform, bei dem deutlich zu erkennen ist, dass die erste Schneckenwelle 22 im ersten Schneckenraum 20 und die zweite Schneckenwelle 26 im zweiten Schneckenraum 24 angeordnet ist, wobei die jeweiligen Schneckenstege einen Gangunterschied aufweisen, der es ermöglicht, dass die beiden Schneckenwellen ineinandergreifen. In Extrusionsrichtung hinter der letzten Windung der Schneckenwellen ist im Gehäusesteg 28 eine längliche Vertiefung 32 vorgesehen, die wie in Fig. 3 gezeigt ausgeführt ist, wobei in diesem Fall eine elektronische Sensoreinheit 30 in der Bohrung angeordnet ist, welche in das Innere der Extruderkammer 14 ragt, wobei es sich um eine längliche Massentemperatursonde handelt, welche die Temperatur über ein PT100-Element bestimmt.

### Bezugszeichenliste

- 10: Doppelschneckenextruder
- 12: Extruderkörper
- 14: Extruderkammer
- 16: Eingabeöffnung
- 18: Extrusionsöffnung
- 20: erster Schneckenraum
- 22: erste Schneckenwelle
- 24: zweiter Schneckenraum
- 26: zweite Schneckenwelle
- 28: Gehäusesteg
- 30: elektronische Sensoreinheit
- 32: längliche Vertiefung
- 34: Vertiefungsbereich
- 36: Extrudersystem
- 38: elektronische Steuerungseinheit
- 40: Antriebseinheit
- 42: Temperatursteuerungsvorrichtung

## Patentansprüche

1. Doppelschneckenextruder (10) zur Verwendung bei der Extrusion von vulkanisierbaren Kautschukmischungen und deren Vorstufen, umfassend:
i) einen Extruderkörper (12) mit einer im Inneren angeordneten Extruderkammer (14), wobei die Extruderkammer (14) eine Eingabeöffnung (16) und eine Extrusionsöffnung (18) umfasst,
wobei die Extruderkammer (14) einen ersten Schneckenraum (20) zur Aufnahme einer ersten Schneckenwelle (22) und einen zweiten Schneckenraum (24) zur Aufnahme einer zweiten Schneckenwelle (26) umfasst,
wobei zwischen dem ersten Schneckenraum (20) und dem zweiten Schneckenraum (24) ein sich durch die Extruderkammer (14) erstreckender Gehäusesteg (28) angeordnet ist,
ii) eine rotierbar im ersten Schneckenraum (20) angeordnete erste Schneckenwelle (22),
iii) eine rotierbar im zweiten Schneckenraum (24) angeordnete zweite Schneckenwelle (26), und
iv) eine elektronische Sensoreinheit (30) zur Messung zumindest einer Sensorinformation,
wobei die elektronische Sensoreinheit (30) in das Innere der Extruderkammer (14) ragt, und
a) wobei der Gehäusesteg (28) eine sich entlang der Extrusionsrichtung erstreckende längliche Vertiefung (32) umfasst, wobei der Gehäusesteg im Vertiefungsbereich (34) weniger weit in das Innere der Extruderkammer (14) ragt als der Gehäusesteg (28) außerhalb des Vertiefungsbereichs (34), wobei die elektronische Sensoreinheit (30) so in der länglichen Vertiefung (32) angeordnet ist, dass die elektronische Sensoreinheit (30) in das Innere der Extruderkammer (14) ragt,
oder
b) wobei die elektronische Sensoreinheit (30) in der in Extrusionsrichtung weisenden Spitze der ersten Schneckenwelle (22) angeordnet ist.

2. Doppelschneckenextruder (10) nach Anspruch 1, wobei die elektronische Sensoreinheit (30) ein Temperatursensor und/oder ein Strömungsdrucksensor und/oder ein Massenstromsensor ist.

3. Doppelschneckenextruder (10) nach einem der Ansprüche 1 oder 2, wobei die elektronische Sensoreinheit (30) ein Thermoelement oder ein Widerstandsmesselement umfasst.

4. Doppelschneckenextruder (10) nach einem der Ansprüche 1 bis 3, wobei die elektronische Sensoreinheit (30) 5 bis 30 mm in das Innere der Extruderkammer (14) ragt, bezogen auf die die elektronische Sensoreinheit umgebende (30) Wandung der Extruderkammer (14) oder der ersten Schneckenwelle (22).

5. Doppelschneckenextruder (10) nach einem der Ansprüche 1 bis 4, wobei die elektronische Sensoreinheit (30) zur Extrusionsöffnung (18) einen Abstand von 0,15*L oder weniger aufweist, wobei L die Länge der Extruderkammer (14) in Extrusionsrichtung ist.

6. Doppelschneckenextruder (10) nach einem der Ansprüche 1 bis 5, wobei die Tiefe der länglichen Vertiefung (32) ausgehend von dem Bereich der maximalen Tiefe in Extrusionsrichtung abnimmt, und/oder wobei die Tiefe der länglichen Vertiefung (32) ausgehend von dem Bereich der maximalen Tiefe entgegen der Extrusionsrichtung abnimmt.

7. Doppelschneckenextruder (10) nach einem der Ansprüche 1 bis 6, wobei die längliche Vertiefung (32) eine Kerbe im Gehäusesteg (28) ist.

8. Doppelschneckenextruder (10) nach einem der Ansprüche 1 bis 7, wobei die elektronische Sensoreinheit (30) so an der in Extrusionsrichtung weisenden Spitze der ersten Schneckenwelle (22) angeordnet ist, dass die elektronische Sensoreinheit (30) entlang einer Richtung in das Innere der Extruderkammer (14) ragt, welche mit der Extrusionsrichtung einen Winkel von 30° oder weniger einschließt.

9. Extrudersystem (36) zur Verwendung bei der Extrusion von vulkanisierbaren Kautschukmischungen oder deren Vorstufen, umfassend:
I) einen Doppelschneckenextruder (10) nach einem der Ansprüche 1 bis 8, und
II) eine elektronische Steuerungseinheit (38) zur Steuerung des Extrudersystems, wobei die elektronische Steuerungseinheit (38) dazu eingerichtet ist, den Doppelschneckenextruder (10) in Abhängigkeit einer von der elektronischen Sensoreinheit (30) gemessenen Sensorinformation zu steuern.

10. Verfahren zur Extrusion einer vulkanisierbaren Kautschukmischung oder deren Vorstufe mit einem Extrudersystem (36) nach Anspruch 9, umfassend die Verfahrensschritte:
v1) Herstellen oder Bereitstellen einer vulkanisierbaren Kautschukmischung oder deren Vorstufe,
v2) Extrudieren der vulkanisierbaren Kautschukmischung oder deren Vorstufe mit dem Doppelschneckenextruder (10), und
v3) Messen einer Sensorinformation mit der elektronischen Sensoreinheit (30),
wobei das Extrudieren von der elektronischen Steuerungseinheit (38) zumindest teilweise in Abhängigkeit von der gemessenen Sensorinformation gesteuert wird.
